# FASCICULE DE BREVET EUROPEEN

(11) **EP 0 775 724 B1**
(45) Date de publication et mention de la délivrance du brevet: **26.04.2000**
(21) Numéro de dépôt: 96402414.5
(22) Date de dépôt: 12.11.1996
(51) Int. Cl.: C08K 13/02, C08K 3/22

(54) **Compositions entièrement biodégradables utiles pour fabriquer des cartouches de chasse et de tir**
Biologisch völlig abbaubare Zusammensetzungen zur Herstellung von Patronen für die Jagd und den Schiesssport
Entirely biodegradable compositions for producing cartridges for hunting and shooting

(30) Priorité: 27.11.1995 FR 9513998
(43) Date de publication de la demande: 28.05.1997
(73) Titulaire: SOCIETE NATIONALE DES POUDRES ET EXPLOSIFS, F-75181 Paris Cédex 04 (FR)
(72) Inventeur: Maucourt, Jacques, 91710 Vert le Petit (FR); Combette, Claude, 75013 Paris (FR); Dubocage, Bernard, 77820 Les Ecrennes (FR)

(56) Documents cités:
- EP-A- 0 152 265
- EP-A- 0 318 788
- EP-A- 0 388 194
- WO-A-94/06866

## Description

La présente invention se rapporte au domaine des matériaux dégradables par des mécanismes biologiques, utilisables notamment pour la chasse et le tir au fusil.

Plus précisément l'invention concerne de nouvelles compositions thermoplastiques entièrement biodégradables ainsi que leur utilisation pour confectionner des éléments entièrement biodégradables de cartouches de chasse et de tir.

Pour remédier au problème de la pollution de la nature, et notamment des prairies de pâturage, par les bourres et les douilles de cartouche de chasse en matière plastique on recherche depuis plusieurs années des cartouches dégradables par mécanismes biologiques encore dites "biodégradables" qui se détruisent avec le temps sous l'action de la lumière et de la pluie. On a ainsi proposé des cartouches dont la douille et la bourre sont constituées par un mélange de polyéthylène et d'amidon. Sous l'action de la lumière et de la pluie l'amidon se détruit et les douilles et bourres qui restent, après le tir, dans les champs se décomposent en petits fragments de polyéthylène. De telles cartouches sont, par exemple, décrites dans les demandes de brevet PCT WO 91/05982 et WO 92/18826.

Afin d'accélérer la décomposition de la bourre et de la douille on a proposé d'inclure à la composition un agent d'oxydation constitué par un sel organique d'un métal de transition comme le naphtenate de cobalt. Cette solution est par exemple décrite dans la demande de brevet PCT WO 88/09354.

WO 94/06866 décrit des polyester biodégradables pour la production d'articles moulés et dont la composition comprend:
a) un polyester, préf. à base d'acide hydroxycarboxylique. Le polyester peut être un copolymère contenant un polyuréthanne;
b) un agent de décomposition basique tel que du bicarbonate de sodium;
c) éventuellement de l'amidon;
d) éventuellement un oxyde de titane (page 43, lignes 19-22);
e) éventuellement un agent plastifiant tel qu'un ester d'acide citrique (page 35, ligne 7).

D1 ne décrit pas de polyester associé à la fois à de l'amidon et de l'oxyde de titane selon la présente invention.

Il demeure néanmoins que toutes ces solutions laissent subsister dans les champs et les prés des petits morceaux de polyéthylène macromoléculaire totalement imputrescible qui peuvent, même s'ils ne sont pas visibles, endommager gravement le système digestif des animaux qui viennent à les avaler avec l'herbe qu'ils broutent.

Le problème de la pollution des prairies par les éléments en matière plastique des cartouches de chasse n'est donc pas parfaitement résolu à l'heure actuelle et l'homme de métier est toujours à la recherche pour les cartouches de chasse d'une matière plastique qui soit entièrement dégradable c'est-à-dire qui ne laisse subsister après exposition à la lumière et à la pluie aucune particule solide susceptible de faire du mal à un animal.

L'objet de la présente invention est précisément de proposer de telles compositions utilisables pour confectionner des éléments de cartouches de chasse et de tir.

L'invention concerne donc des compositions thermoplastiques dégradables par des mécanismes biologiques contenant un liant hydrocarboné, de l'amidon et un agent d'oxydation, caractérisées en ce que le dit liant comporte des groupes fonctionnels "ester" 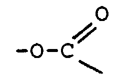 associés à des chaînes hydrocarbonées choisies dans le groupe constitué par les chaînes aliphatique saturées et insaturées comportant de 1 à 20 atomes de carbone et en ce que l'agent d'oxydation est un dioxyde de titane.

Le choix d'un agent d'oxydation très particulier, l'oxyde de titane permet d'assurer, par exposition à la lumière, la scission des chaînes hydrocarbonées entre les fonctions ester. Ces chaînes, compte tenu du faible nombre d'atomes de carbone qu'elles contiennent, sont de taille microscopique et ne présentent aucun danger pour les animaux.

Selon une première variante préférée de l'invention l'oxyde de titane sera sous forme anatase et non sous forme rutile, la forme anatase ayant vis à vis de la lumière un pouvoir réfléchissant supérieur qui permet une meilleure attaque photochimique des chaînes entre les groupes esters.

Selon une seconde variante préférée de l'invention les dites chaînes aliphatiques comporteront de 2 à 12 atomes de carbone.

Enfin selon une troisième variante préférée de l'invention le dit liant comporte également, en plus des groupes fonctionnels esters, des groupes fonctionnels "uréthannes" 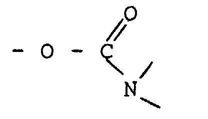 également susceptibles d'être hydrolysées.

Avantageusement le rapport molaire entre les groupes uréthannes et les groupes esters sera inférieur à 0,05.

Selon un premier mode préféré de réalisation de l'invention, les compositions comportent en plus au moins un agent à décomposition basique choisi dans le groupe constitué par les stéarates alcalins et alcalino-terreux, par les carbonates alcalins et alcalino-terreux et par les sulfates alcalins et alcalino-terreux. Cet agent basique est destiné à générer par hydrolyse une certaine basicité favorisant l'attaque de la liaison ester et éventuellement de la liaison uréthanne.

Avantageusement cet agent à décomposition basique sera constitué par un mélange de stéarate de calcium et de carbonate de calcium, ce dernier composé favorisant la pénétration de l'eau de pluie dans la composition.

Selon un second mode préféré de réalisation de l'invention, les compositions comportent en plus un plastifiant permettant leur mise en forme selon les techniques usuelles de mise en forme des matériaux thermoplastiques à savoir l'injection ou l'extrusion éventuellement complétée par un étirage. Ce plastifiant qui maintient une forte proportion de structures amorphes dans la composition permet ainsi une bonne pénétration de l'humidité au moment de la destruction de ladite composition.

Avantageusement ce plastifiant sera choisi dans le groupe constitué par les acétyl-citrates de trialkyle dont les radicaux alkyle comportent chacun de 2 à 4 atomes de carbone, comme, par exemple, l'acétyl citrate de triéthyle ou l'acétyl citrate de tributyle.

Les compositions préférées selon l'invention comprennent :
- au moins 75% en poids de liant,
- au moins 2,5% en poids d'amidon,
- au moins 0,5% en poids d'oxyde de titane sous forme anatase,
- au moins 0,5% en poids de carbonate de calcium,
- au moins 0,5% en poids de stéarate de calcium,
- au moins 1,0% en poids d'acétyl citrate de trialkyle.

L'invention concerne également des éléments pour cartouches de chasse et de tir constitués par une composition selon l'invention.

Ces éléments peuvent être des bourres dégradables par des mécanismes biologiques.

Ces éléments peuvent également être des douilles dégradables par des mécanismes biologiques. On entend par "douille" dans la présente description aussi bien la douille complète que le tube cylindrique seul constituant, avec le culot, la douille.

On utilisera pour ce faire avantageusement des compositions présentant à 20°C un allongement à la rupture au moins égal à 200% et une résistance à la rupture au moins égale à 20 MPa.

Les compositions selon l'invention étant des composition thermoplastiques, ces éléments peuvent aisément être fabriqués en continu par injection ou par extrusion.

Lorsqu'ils sont abandonnés dans la nature après le tir de la cartouche , ils se dégradent totalement en radicaux moléculaires au bout d'un laps de temps au moins égal à 6 mois suivant la nature des sols ainsi que des conditions d'humidité et d'ensoleillement.

On décrit ci-après une mise en oeuvre préférée de l'invention.

Pour cette mise en oeuvre on utilise comme liant thermoplastique des copolymères obtenus par réaction du butane diol - 1,4 avec l'acide succinique et l'acide adipique.

Afin d'allonger les chaînes du liant thermoplastique la formulation du liant pourra contenir un peu d'un diisocyanate aliphatique ou cycloaliphatique pour introduire quelques motifs "uréthanne".

De tels copolymères sont commercialisés par exemple par la société SHOWA DENKO sous la marque de commerce "BIONOLLE" ®.

Les compositions préférées contiennent de 75% en poids à 90% en poids de ce type de liant, préférentiellement environ 87,5% en poids.

Le liant est introduit sous forme de granulés dans un mélangeur chauffé, par exemple un co-malaxeur "BUSS", bien connu de l'homme de l'art de manière à former une pâte à laquelle les additifs suivants sont rajoutés :
**i)** entre 2,5 et 20% en poids d'amidon, préférentiellement de l'amidon de blé,
**ii)** entre 1 et 10% en poids d'acétyl citrate de triéthyle ou de tributyle,
**iii)** entre 0,5 et 5,0% en poids d'oxyde de titane TiO₂, sous forme anatase,
**iv)** entre 0,5 et 2,5% en poids de carbonate de calcium,
**v)** entre 0,5 et 1,0% en poids de stéarate de calcium

Un exemple de composition préférée au sens de la présente invention est le suivant :
- liant "BIONOLLE"® : 87,5% en poids
- amidon de blé : 8,0% en poids
- acétyl citrate de tributyle : 3,0% en poids
- TiO₂ (variété anatase) : 0,5% en poids
- carbonate de calcium : 0,5% en poids
- stéarate de calcium : 0,5% en poids

Cette composition est particulièrement adaptée à la confection de bourres dégradables.

Lorsque les additifs sont bien incorporés au liant de manière parfaitement homogène, on récupère la composition sous forme de granulés thermoplastiques qui peuvent être conservés dans le temps.

Ces granulés sont particulièrement bien adaptés grâce aux caractéristiques du liant et du plastifiant pour alimenter, le moment voulu, une machine de fabrication en continu, par injection ou par extrusion, de bourres ou de douilles pour cartouches de chasse et de tir.

Ces bourres ou douilles se dégradent bien lorsqu'elles sont soumises à l'action conjointe de la lumière et de l'humidité. En effet l'oxyde de titane TiO₂, grâce son pouvoir réfléchissant, favorise l'oxydation et la rupture des chaînes hydrocarbonées entre les groupes fonctionnels esters et uréthannes. Cette oxydation est encore accélérée par les composés à décomposition basique qui, sous l'action de l'humidité, placent ces groupes fonctionnels dans un milieu favorable à leur scission.

Enfin la présence d'un plastifiant est favorable à la pénétration de l'eau qui dissout l'amidon. Les motifs hydrocarbonés résiduels ne comportant qu'une vingtaine d'atomes de carbone sont, comme il a déjà été dit, de taille moléculaire et non macromoléculaire comme cela est le cas avec les solutions de l'art antérieur. Ces motifs de dimensions moléculaires sont totalement inoffensifs pour les animaux et par ailleurs sont très vite entraînés dans le sol sous l'action de l'eau de pluie.

## Revendications

1. Compositions thermoplastiques dégradables par des mécanismes biologiques contenant un liant hydrocarboné, de l'amidon et un agent d'oxydation, caractérisées en ce que le dit liant comporte des groupes fonctionnels "ester" 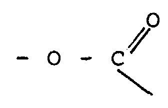 associés à des chaînes hydrocarbonnées choisies dans le groupe constitué par les chaînes aliphatiques saturées et insaturées comportant de 1 à 20 atomes de carbone et en ce que l'agent d'oxydation est un dioxyde de titane.

2. Compositions selon la revendication 1 caractérisées en ce que le dioxyde de titane est sous forme anatase.

3. Compositions selon la revendication 1 caractérisées en ce que la dite chaîne aliphatique comporte de 2 à 12 atomes de carbone.

4. Compositions selon la revendication 2 caractérisées en ce que le dit liant comporte également des groupes fonctionnels "uréthanne"

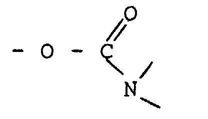

5. Compositions selon la revendication 1 caractérisées en ce qu'elles comportent en plus au moins un agent à décomposition basique choisi dans le groupe constitué par les stéarates alcalins et alcalino-terreux, par les carbonates alcalins et alcalino-terreux et par les sulfates alcalins et alcalino-terreux.

6. Compositions selon la revendication 5 caractérisées en ce que ledit agent à décomposition basique est constitué par un mélange de stéarate de calcium et de carbonate de calcium.

7. Compositions selon la revendication 5 caractérisées en ce qu'elles comportent en plus un plastifiant.

8. Compositions selon la revendication 7 caractérisées en ce que le dit plastifiant est choisi dans le groupe constitué par les acétyl citrates de trialkyle dont les radicaux alkyle comportent chacun de 2 à 4 atomes de carbone.

9. Compositions selon la revendication 7 caractérisées en ce qu'elles comprennent :
- au moins 75% en poids de liant,
- au moins 2,5% en poids d'amidon,
- au moins 0,5% en poids d'oxyde de titane,
- au moins 0,5% en poids de carbonate de calcium,
- au moins 0,5% en poids de stéarate de calcium,
- au moins 1% en poids d'acétyl citrate de trialkyle.

10. Eléments pour cartouches de chasse et de tir caractérisés en ce qu'ils sont constitués par une composition selon l'une quelconque des revendications 1 à 9.

11. Eléments selon la revendication 10 caractérisés en ce que lesdits éléments sont des bourres dégradables par des mécanismes biologiques.

12. Eléments selon la revendication 10 caractérisés en ce que les dits éléments sont des douilles dégradables par des mécanismes biologiques.

13. Eléments selon l'une quelconque des revendications 11 ou 12 caractérisés en ce que leur composition constitutive présente à 20°C un allongement à la rupture au moins égal à 200% et une résistance à la rupture au moins égale à 20 MPa.

## Patentansprüche

1. Nach biologischen Mechanismen abbaubare thermoplastische Zusammensetzungen, die ein Kohlenwasserstoff-Bindemittel, Stärke und ein Oxidationsmittel enthalten,
dadurch gekennzeichnet, daß
das Bindemittel funktionelle Estergruppen 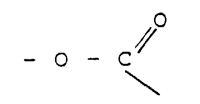 aufweist, die an Kohlenwasserstoffketten, die unter gesättigten und ungesättigten aliphatischen C₁₋₂₀-Ketten gebunden sind,
und das Oxidationsmittel ein Titandioxid ist.

2. Zusammensetzungen nach Anspruch 1, dadurch gekennzeichnet, daß das Titandioxid in Form von Anatas vorliegt.

3. Zusammensetzungen nach Anspruch 1, dadurch gekennzeichnet, daß die aliphatische Kette 2 bis 12 Kohlenstoffatome aufweist.

4. Zusammensetzungen nach Anspruch 2, dadurch gekennzeichnet, daß das Bindemittel ferner funktionelle Urethangruppen 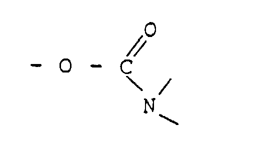 aufweist.

5. Zusammensetzungen nach Anspruch 1, dadurch gekennzeichnet, daß sie ferner mindestens ein basisches Zersetzungsmittel enthalten, das unter Alkali- und Erdalkalistearaten, Alkali- und Erdalkalicarbonaten und Alkali- und Erdalkalisulfaten ausgewählt ist.

6. Zusammensetzungen nach Anspruch 5, dadurch gekennzeichnet, daß das basische Zersetzungsmittel aus einem Gemisch von Calciumstearat und Calciumcarbonat besteht.

7. Zusammensetzungen nach Anspruch 5, dadurch gekennzeichnet, daß sie ferner einen Weichmacher enthalten.

8. Zusammensetzungen nach Anspruch 7, dadurch gekennzeichnet, daß der Weichmacher unter Acetyltrialkylcitraten ausgewählt ist, deren Alkylgruppen jeweils 2 bis 4 Kohlenstoffatome aufweisen.

9. Zusammensetzungen nach Anspruch 7, dadurch gekennzeichnet, daß sie enthalten:
- mindestens 75 Gew.-% Bindemittel,
- mindestens 2,5 Gew.-% Stärke,
- mindestens 0,5 Gew.-% Titanoxid,
- mindestens 0,5 Gew.-% Calciumcarbonat,
- mindestens 0,5 Gew.-% Calciumstearat und
- mindestens 1 Gew.-% Acetyltrialkylcitrat.

10. Elemente für Patronen für die Jagd und den Schießsport, dadurch gekennzeichnet, daß sie aus einer Zusammensetzung nach einem der Ansprüche 1 bis 9 bestehen.

11. Elemente nach Anspruch 10, dadurch gekennzeichnet, daß sie nach biologischen Mechanismen abbaubare Ladungspfropfen sind.

12. Elemente nach Anspruch 10, dadurch gekennzeichnet, daß sie nach biologischen Mechanismen abbaubare Patronenhülsen sind.

13. Elemente nach Anspruch 11 oder 12, dadurch gekennzeichnet, daß die Zusammensetzung, aus der sie aufgebaut sind, bei 20 °C eine Bruchdehnung von mindestens 200 % und eine Bruchfestigkeit von mindestens 20 MPa aufweist.

## Claims

1. Thermoplastic compositions degradable by biological mechanisms, containing a hydrocarbon binder, starch and an oxidizing agent, characterized in that the said binder includes "ester" functional groups 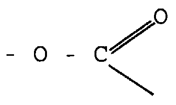 associated with hydrocarbon chains chosen from the group consisting of saturated and unsaturated aliphatic chains having 1 to 20 carbon atoms and in that the oxidizing agent is titanium dioxide.

2. Compositions according to claim 1, characterized in that titanium dioxide is in the anatase form.

3. Compositions according to claim 1, characterized in that the said aliphatic chain has 2 to 12 carbon atoms.

4. Compositions according to claim 2, characterized in that the said binder also includes "urethane" functional groups

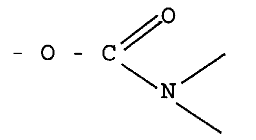

5. Compositions according to claim 1, characterized in that they additionally include at least one basic decomposition agent chosen from the group consisting of alkali metal and alkaline earth stearates, of alkali metal and alkaline earth carbonates and of alkali metal and alkaline earth sulfates.

6. Compositions according to claim 5, characterized in that the said basic decomposition agent consists of a mixture of calcium stearate and calcium carbonate.

7. Compositions according to claim 5, characterized in that they additionally include a plasticizer.

8. Compositions according to claim 7, characterized in that the said plasticizer is chosen from the group consisting of trialkyl acetyl citrates of which each of the alkyl radicals has 2 to 4 carbon atoms.

9. Compositions according to claim 7, characterized in that they comprise:
- at least 75 % by weight of binder,
- at least 2.5 % by weight of starch,
- at least 0.5 % by weight of titanium dioxide,
- at least 0.5 % by weight of calcium carbonate,
- at least 0.5 % by weight of calcium stearate,
- at least 1 % by weight of trialkyl acetyl citrate.

10. Components for hunting and shooting cartridges, characterized in that they consist of a composition according to any one of claims 1 to 9.

11. Components according to claim 10, characterized in that the said components are waddings degradable by biological mechanisms.

12. Components according to claim 10, characterized in that the said components are cases degradable by biological mechanisms.

13. Components according to either of claims 11 or 12, characterized in that their constitutive composition has at 20°C an elongation at break at least equal to 200 % and a breaking strength at least equal to 20 MPa.
